# EUROPEAN PATENT APPLICATION

(11) **EP 2 161 957 A1**
(43) Date of publication of application: **10.03.2010**
(21) Application number: 08290834.4
(22) Date of filing: 05.09.2008
(51) Int. Cl.: H04W 24/10, H04B 17/00, H04W 16/24

(54) **Channel measurement in radio communication systems**

(71) Applicant: Alcatel Lucent, 75008 Paris (FR)
(72) Inventor: Doll, Mark, 70469 Stuttgart (DE); Halbauer, Hardy, 76275 Ettlingen (DE); Chen, Yejian, 70191 Stuttgart (DE); Gloss, Bernd, 70569 Stuttgart (DE); Fetscher, Robert, 70186 Stuttgart (DE); Stanze, Oliver, 70499 Stuttgart (DE); Cesar, Bozo, 70439 Stuttgart (DE)
(74) Representative: Richardt, Markus Albert

(57) **Abstract**

The present invention relates to measurement in radio communication systems. In particular, the present invention relates to a downlink measurement method in a cellular wireless communication system, the communication system itself and its components like base stations and mobile stations. The radio communication system (1) comprises at least two mobile station (2, 3) and at least two base stations (4, 5). One of said mobile stations is a first mobile station (2) associated with a serving base station (4) and the at least one further mobile station (3) is associated with a neighboring base station (5) of the serving base station (4). The serving base station (4) is adapted to generate a schedule for measurement signals and to transmit said schedule to the first mobile station (2) and to the further mobile station (3) via the neighboring base station (5). The serving base station (4) is further adapted to transmit measurement signals in accordance with said schedule to the first mobile station (2) and also to transmit said measurement signals to the further mobile station (3). Furthermore, the first mobile station (2) is adapted to calculate a mean channel state for the downlink channel from the serving base station (4) to itself (2) and to transmit said mean channel state to the serving base station (4). The further mobile station (3) is adapted to calculate a mean channel state for the downlink channel from the serving base station (4) to itself (3) and to transmit said mean channel state to the neighboring base station (5). In addition, at least one of said base stations (4, 5) is adapted to transmit the respective mean channel state to at least one further base station of the radio communication system (1), so that at least said further base station can be provided with channel estimations for downlink channels between another base station and at least some mobile stations within a certain area surrounding itself.

## Description

### Field of the invention

The present invention relates to channel measurement in radio communication systems. In particular, the present invention relates to a downlink channel measurement method in a cellular wireless communication system, the communication system itself and its components like base stations and mobile stations.

### Background and prior art

Cellular wireless data access systems typically consist of a set of base stations each with a certain number of sectors and each sector having a transmitter and a receiver with one or multiple antenna elements. Mobile stations are typically assigned to one or more base stations by wireless connections to one sector of each of these base stations. Base stations and sectors are related to geographical areas where the distance to the antennas belonging to the sectors is low, the angular range supported by the antenna corresponds to that area and the channel quality between users located in that area and the base station including interference from other mobile stations/base stations is sufficient to establish a wireless connection.

However, connections between a base station and mobile stations that are assigned to the same sector of that base station can typically have significantly different channel qualities and very different path losses depending on their distance to the base station, which typically varies from a few meters up to a few kilometers. For example, WiMAX (IEEE 802.16) uses OFDM/OFDMA and each single radio resource (frequency sub-band and time slot) is used in one point-to-point transmission. Multiplexing and multiple access is done using different, at least approximately orthogonal radio resources. However, in addition to the above problems a strong interference may occur to base stations and mobile stations in systems like WiMAX, if mobile stations are located at sector borders or cell borders, especially if such systems operate in multi-cellular deployments with frequency reuse 1.

It is therefore an object of the present invention to provide a measurement basis for advanced interference mitigation schemes.

This object and other objects are solved by the features of the independent claims. Preferred embodiments of the invention are described by the features of the dependent claims.

### Summary of the invention

A channel measurement method for advanced interference mitigation schemes in a radio communication system is provided, said system comprising at least two mobile stations and at least two base stations. A serving base station for a first one of said mobile stations generates a schedule for measurement signals, transmits said schedule to the first mobile station, and transmits measurement signals to the first mobile station in accordance with said schedule. The first mobile station calculates a mean channel state for the downlink channel from the serving base station to itself and transmits said mean channel state to the serving base station. According to the present invention the schedule is also transmitted from the serving base station to the at least one further mobile station via the neighboring base station serving said further mobile station. In addition, the measurement signals are also transmitted from the serving base station to the further mobile station, which calculates a mean channel state for the downlink channel from the serving base station to itself and transmits said mean channel state to the neighboring base station. Finally, at least one of said base stations transmits the respective mean channel state to at least one further base station of the radio communication system.

To enable inter-sector channel estimation, as proposed by the present invention, the serving base station coordinates its measurement with the at least one neighboring base station within a certain range or area. This means that all base stations within that range schedule measurements during the same time/same OFDM symbols and make sure not to schedule any other transmissions during that time. Furthermore, all these measurement allocations must not overlap. For example, each subcarrier is assigned to at most one base station at the same time within a certain area surrounding each base station. In case that the same subcarriers are allocated to more than one base station and code division multiplex is used to separate the signals, each orthogonal code is assigned to at most one base station within said area.

The range is given in units of sectors, e.g. a range of 1 means coordination with all neighboring sectors (first ring), a range of 2 means a coordination also with neighbors of neighboring sectors (second ring), and so on. The range is typically constant for all base stations but configurable, e.g. to the needs of the deployed advanced interference mitigation scheme for which coordinated downlink measurement according to the present invention provides the required inter-sector channel estimations. That is, the range defines a quasi circular area around a base station, or more precisely around a sector, with the range as its radius. Thus, every base station has its own area with itself at the center, with areas of nearby base stations partly overlapping.

The at least one further mobile station transmits the calculated mean channel state for a downlink channel between the serving base station and itself to at least one further base station which serves said at least one further mobile station of the communication system. Preferably, the first and further mobile stations transmit their respectively calculated mean channel state to their respective serving base station which in turn send said channel states to all base stations of the communication system that have said mobile stations falling into their respective area. Thereby, said base stations are provided with channel estimations for all base station - mobile station channels within the area surrounding themselves. Thus, coordinated downlink measurement according to the present invention can provide the base station at the center of an area with channel estimations of all base station - mobile station channels within its area that means of all channels between all base stations and mobile stations that fall within its area. A special case would be a range of infinity, in which case coordinated downlink measurement provides every base station with channel estimation of all base station - mobile station channels within the cellular network. A range of zero would result in standard downlink measurement as currently specified for IEEE 802.16/WiMAX.

To enable all mobile stations within the determined area to calculate channel estimations based on the received measurement signals, separately for each base station, every base station distributes to all other base stations within said area the measurement allocation and transmit parameters like transmit power, antenna configuration and beamforming weights that each of them uses for its particular measurement allocation. This information exchange is typically carried out over the backhaul link.

To predict interference for transmissions taking place on arbitrary subcarriers some time in the future, a mean channel state is estimated, which is frequency independent and only changes relatively slowly over time, thus averaging out (frequency selective) fast fading and only leaving (relatively frequency independent) slow fading/movement related changes of the channel under estimation. For this purpose coordinated downlink measurement is repeated regularly, typically periodically, and a mean channel state per base station is calculated in each mobile station by averaging over multiple measurements in frequency and time. Averaging can be carried out by e.g. calculating an arithmetic mean over all subcarriers of a base station within one measurement occurrence and smoothing these over multiple recurrences e.g. using an exponentially weighted moving average.

Assuming channel reciprocity, the estimation is usable for both uplink and downlink interference prediction. Channel reciprocity holds for TDD systems. With regard to the broad averaging applied and the typically small spacing of the uplink and downlink frequency bands, the estimation might be sufficient for the uplink in FDD systems, too.

Now every base station has an estimation of the channels from itself as base station to all mobile stations within said determined range. To furthermore allow every base station to know every base station - mobile station channel within said range and not only those with itself as base station, every mobile station may transmit its estimated per base station mean channel state to its serving base station that may distribute said channel estimation to at least one further or all other base stations within said range, again typically via the backhaul link. A typical mean channel state can be the average path loss plus angle under which the measurement signal was received by the mobile station. A more elaborated channel state specifies the averaged per base station antenna - mobile station antenna pair (SISO) channel impulse response.

Thus, all base stations are now able to predict the mutual interference of transmissions within their own sector and transmissions within other sectors within said range. The coordinated downlink measurement according to the present invention thereby provides the measurement basis for advanced interference mitigation schemes. According to a preferred embodiment of the present invention the measurement signals can be dedicated sounding signals or signals already regularly transmitted for other purposes like the preamble. Instead of using such well-known signals, it is also possible to carry out inter-sector channel measurements on transmitted data bursts. In that case the schedule includes also information about what is transmitted, e.g. the location of the pilot tones. This is not necessary in the case of sounding signals, since the signal is predefined.

Regarding the signaling load induced by coordinated downlink measurement according to the present invention, some of the information exchange steps, for example, the distribution of the subcarrier allocations, the transmit power, and the estimated per base station mean channel state from each mobile station to all base stations within the specific range, can be limited to take place only once or when the exchanged information has changed by more than a certain threshold. This will help reducing the signaling load, but requires information to be cached by all receiving base stations within said range. If specific sounding signals are used, the subcarrier allocation used for sounding is typically constant in time and is therefore exchanged only once when a base station is powered on. The same holds true for the transmit parameters. In case that data bursts are used as measurement signals, the transmit power is the same for all subcarriers of a measurement allocation and typically changes continuously in relatively small steps as the base station changes its transmit power for other downlink transmissions, e.g. as a result of the applied advanced interference mitigation scheme that reacts to a change in mobile station distribution. The same holds for the calculated estimation of the mean channel state, which by design changes continuously. Consequently, signaling load only increases with increasing mobile station mobility and is dominated by the distribution of the estimated per base station - mobile station mean channel state from each mobile station to all other base stations within said range.

Information about the measurement allocations should be distributed using a reliable signaling transport, as it changes seldom and is accordingly transmitted quite infrequently. In contrast, sporadically losing information of an estimated mean channel state only results in a relatively small deviation in the channel estimation for a relatively short time, as said information changes quite often and in a continuous fashion with small steps. Therefore, said information may be distributed in a resource efficient way using an unreliable transport, e.g. by multicasting, provided that small inconsistencies in the channel estimations among base stations is acceptable for the deployed advanced interference mitigation scheme.

To sum up, according to the present invention mean channel states are estimated not only between a serving base station and its mobile stations but also between the serving base station and neighboring (further) mobile stations served by neighboring base stations. Measurement signals generated by base stations with well-defined modulation of its allocated subcarriers and with a well-defined transmit power are received by the first mobile station and a number of neighboring mobile stations, wherein the number of neighboring mobile stations depends on the configured range. Neighboring mobile stations receive a schedule for the measurement signals of the serving base station from the serving base station via their respective (serving) base stations. The neighboring mobile stations estimate a mean channel state for the serving base station and transmit said estimation to their respective base station that further distributes said estimation at least to the serving base station, preferably to all base stations that have both the serving base station and the corresponding neighboring mobile station falling within their respective area surrounding them. In the preferred case, also the serving base station transmits the channel estimation received from its mobile stations to all said base stations. This provides at least the serving base station, preferably all said base stations, with channel estimations for said serving base station.

Thus, the present invention describes a measurement scheme for measuring the downlink channel between arbitrary pairs of base stations and mobile stations, wherein the term downlink refers to the direction from a base station to a mobile station. In particular, based on the present invention, inter-cell or inter-sector interference can be reduced by coordinating the transmissions in sectors that are close to each other, scheduling only transmissions to/from mobile stations on the same time and frequency resource that result in a low mutual interference. To determine a suitable scheduling, said mutual interference is predicted by knowledge of the channel between the mobile station and its serving base station and the channel between said base station and a neighboring mobile station in a sector served by another neighboring base station near by. A base station is referred to a mobile station's base station with respect to all mobile stations that belong to one of the sectors of said base station.

In particular, the present invention allows for interference mitigation between neighboring sectors of a cellular wireless communication system, since the coordinated downlink measurement gathers channel estimations separately for each pair of base station and mobile station, thereby enabling advanced interference mitigation schemes, which e.g. schedule only those pairs on the same time and frequency resource that show a small mutual interference. Furthermore, data throughput for mobile stations located at sector borders is increased, wherein the additional signaling load is relatively low.

These and other aspects of the present invention will be apparent from and elucidated with reference to the embodiments thereafter. It should be noted that the use of reference signs shall not be construed as limiting the scope of the invention.

### Brief description of the drawings

- Figure 1: shows an exemplary radio communication system, comprising two mobile stations and two base stations;
- Figure 2: shows the radio communication system of figure 1 in more detail;
- Figure 3: shows a flow chart of a measurement method according to the present invention;
- Figure 4a: shows a first timing variant in a radio communication system based on the IEEE 802.16e standard;
- Figure 4b: shows a second timing variant in a radio communication system based on the IEEE 802.16e standard; and
- Figure 4c: shows a third timing variant in a radio communication system based on the IEEE 802.16e standard.

### Detailed description of the drawings

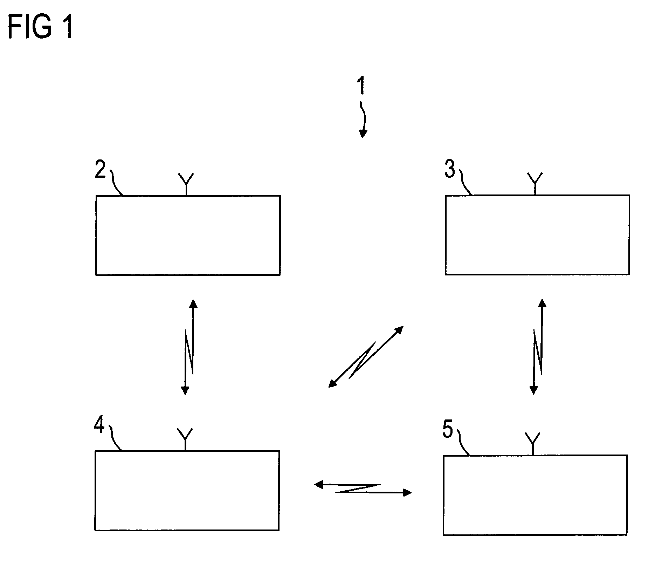

Figure 1 shows an exemplary radio communication system 1, comprising two mobile stations 2, 3 and two base stations 4, 5. One of said base stations is a serving base station 4 for a first one 2 of mobile stations and the at least one further mobile station 3 is served by a neighboring base station 5 of the serving base station 4. According to an embodiment of the present invention the serving base station 4 is adapted to generate a schedule for downlink measurement signals and to transmit said schedule to the first mobile station 2 and to the neighboring base station 5 that further transmits said schedule to the further mobile station 3. The serving base station 4 is further adapted to transmit downlink measurement signals in accordance with said schedule to the first mobile station 2 and to the further mobile station 3. In addition, the first and further mobile stations 2, 3 are adapted to calculate a mean channel state for the serving base station 4. Each mobile station transmits its calculated mean channel state to its base station, i.e. the first mobile station 2 to the serving base station 4 and the further mobile station 3 to the neighboring base station 5. At least one of said base stations further transmits the respective mean channel state that it received from its mobile station to at least one further base station of the radio communication system 1.

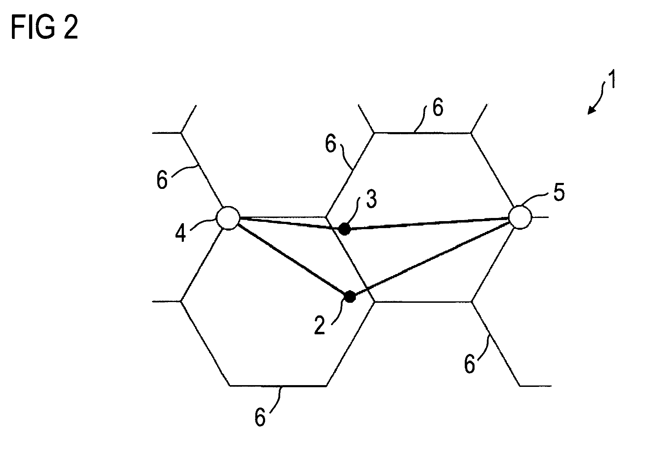

Figure 2 shows the radio communication system 1 of figure 1 in more detail. As can be seen from figure 2 each of the base stations 4, 5 has a certain number of sectors 6, wherein a first mobile station 2 is located in a sector served by a first base station 4 and a second mobile station 3 is located in a sector served by a second base station 5. That is, the first mobile station 2 is associated with the first base station 4 and the second mobile station 3 is associated with the second base station 5, wherein the respective sectors 6 abut against each other. The standard downlink measurement as specified in the IEEE 802.16/WiMAX standard allows the first mobile station 2 to estimate a first downlink channel between the first base station 4 and the first mobile station 2 and allows the second mobile station 3 to estimate a second downlink channel between the second base station 5 and the second mobile station 3. However, there is no mechanism specified by IEEE 802.16e to estimate the channel state between a mobile station and a base station not serving it. From downlink transmission mobile stations can measure and report the RSSI (Received Signal Strength Indicator) of other base stations via the MOB SCN-REP message, but, for example, not the angle under which a signal from a base station is received. In contrast, coordinated downlink measurement according to the present invention additionally allows estimating inter-sector downlink channels between the second mobile station 3 and the first base station 4 and between the first mobile station 2 and the second base station 5, respectively.

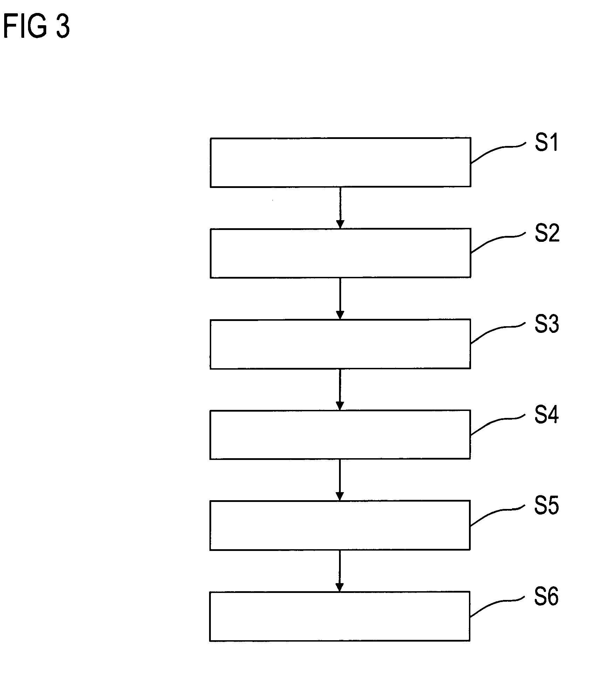

Figure 3 shows a flow chart of a measurement method according to the present invention. Such method can be applied to a radio communication system comprising at least two mobile stations and at least two base stations, each having a certain number of sectors, as for example shown in figures 1 and 2. One of said base stations is a serving base station for a first one of said mobile stations and the at least one further mobile station is a neighboring mobile station that is served by a neighboring base station of said serving base station. In a first step S1 the serving base station generates a schedule for downlink measurement signals. In a second step S2 said schedule is transmitted from the serving base station to the first mobile station and to the further mobile station via the neighboring base station. In a third step S3 downlink measurement signals are transmitted from the serving base station to the first and further mobile stations, that is, both transmissions occur simultaneously. In a fourth step S4 the first mobile station calculates a first mean channel state for the serving base station and the further mobile station calculates a second mean channel state for the serving base station. In a fifth step S5, the first mobile station transmits said first mean channel state to the serving base station and the further mobile station transmits said second mean channel state to the neighboring base station of the serving base station. In a sixth step, at least one of said base stations transmits the respective mean channel state to at least one further base station of the radio communication system.

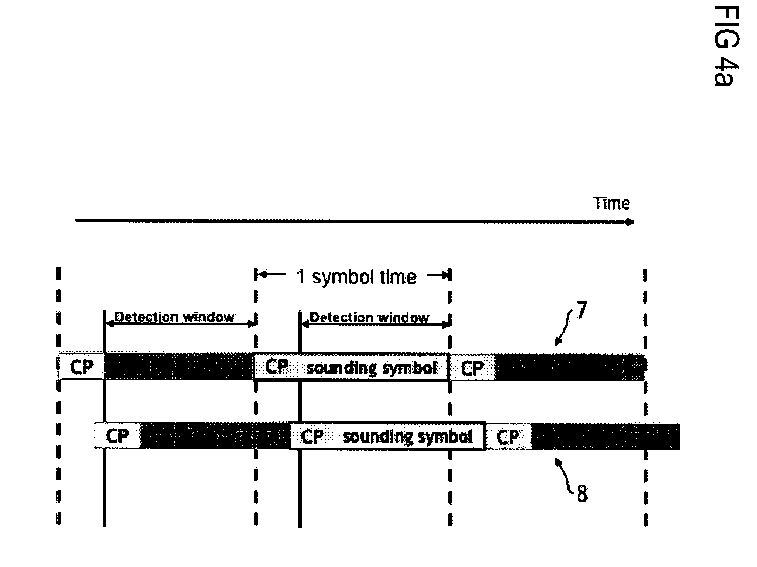

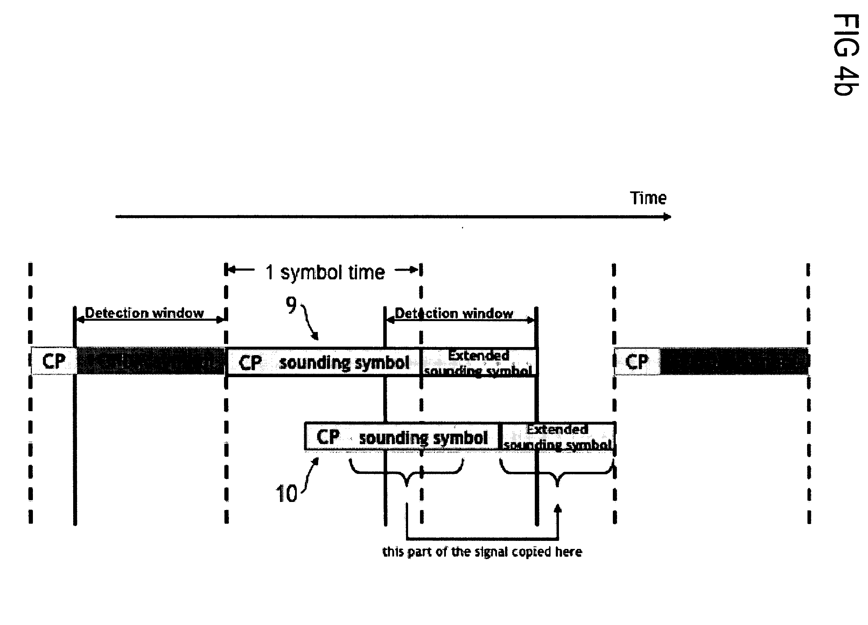

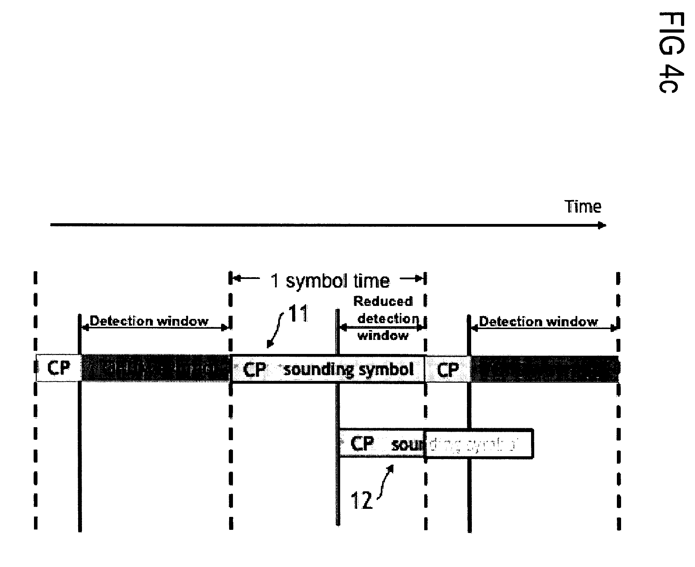

Figures 4a, 4b, and 4c show first, second, and third timing variants, respectively, in a communication system based on the IEEE 802.16e (WiMAX, Worldwide Interoperability for Microwave Access) standard. In IEEE 802.16e mobile stations synchronize their OFDMA transmissions to their base station in way as if all mobile stations were co-located with their base station. This requires mobile stations farther away from the base station to transmit earlier. In coordinated downlink measurement according to the present invention, such synchronization is impossible, since the transmitted measurement signal is destined for multiple mobile stations at different distances. Consequently, coordinated downlink measurement transmission will arrive too late at all mobile stations except the mobile station which is associated with the base station transmitting said measurement signal.

In the following, three timing variants are proposed to cope with this desynchronization in coordinated downlink measurement. The respective timing variants can be used so that more distant neighboring mobile stations are able to receive the downlink sounding signals with an appropriate timing window without being disturbed by regular communication of the neighboring base stations.

OFDM signals, as shown in figures 4a, 4b, and 4c incorporate a cyclic prefix (CP) to cope with multipath propagation and slight desynchronization. Figure 4a shows a first signal 7 representing an optimum timing adjustment of a mobile station to its base station, so that the sounding symbol is exactly within the detection window. According to the timing variant shown in figure 4a the CP size corresponds to a propagation delay equivalent to a distance of a few kilometers (typically about 3 km). This allows coordinated downlink measurement to be carried out with a range set to one inter-base station distance and with only those mobile stations near the (far away) sector borders participating. That is, only a mobile station with a distance to its own and to its neighboring base stations not differing by more than what can be absorbed by the CP are participating in coordinated sounding according to the first timing variant. Normally, only a part of the CP equivalent distance can be taken into account here, depending on how much of the CP is needed to absorb intersymbol interference caused by delay spread from the OFDM symbol directly preceding the sounding symbol. In the case shown by the second signal 8 in figure 4a a decoding within the detection window is still feasible, since corresponding CP and symbol part are within the detection window.

The second timing variant according to the present invention is shown in figure 4b. In Figure 4b, a first signal 9 represents the signal at a mobile station associated with the serving base station and a second signal 10 represents the signal at one neighboring mobile station. According to the second timing variant the sounding symbol of the second signal 10 is extended by the requirements of a propagation delay to the farthest neighboring mobile stations inside the coordination range, since the delay of the second signal 10 is larger than the CP (e.g. a signal from a more distant base station). The cyclic extension of the symbol has the effect of an increased CP. Furthermore, the length of the extension can be adapted to the expected delay of the signal. Therefore, the time a base station transmits the sounding signal is increased while the time a mobile station samples the received signal is kept constant. Since sounding transmissions never arrive too early but always too late, the detection takes place at the end of the transmission time, e.g. the detection window is delayed by an offset equal to the time the transmission of the sounding signal was extended. In principle, an arbitrary (in steps of the sampling period) increase is possible. A base station simply cyclically repeats its generated OFDM symbol, excluding the prepended CP, with the last repetition being repeating only the first part of the symbol. The cyclic repetition prevents a phase jump within the transmission and retains orthogonality of the signals from different base stations received by the mobile stations, irrespective where a mobile station starts its (one useful symbol time long) detection window. Each increase by one useful symbol time corresponds to an increase of about 30 km in the possible coordinated sounding range, assuming a typical symbol time. However, due to symbol border overlap the signal occupies a multiple of one symbol time, leading to an increase of the overhead by the same factor.

The third timing variant according to the present invention is shown in figure 4c. In Figure 4c, a first signal 11 represents the signal at a mobile station associated with the serving base station and a second signal 12 represents the signal at one neighboring mobile station. According to the third timing variant the time a base station transmits its sounding signal is kept constant (1 symbol time) while the time a mobile station samples the received signal is decreased to a certain fraction of the regular detection window (one useful symbol time). Similar to the second timing variant, shown in Figure 4b, detection by the mobile station takes place at the end of the transmission time at the end of the sounding symbol.

Due to the usage of a FFT (Fast Fourier Transform) for OFDM, only fractions 1/2", n=1, 2, ... are possible. Since the number of samples and thereby the size of the FFT on the receiving side is reduced to that fraction, only every 2"-th subcarrier m.2", m=1, 2, ... around the DC subcarrier m=0 can be resolved by the FFT at the mobile station and is therefore available for sounding, increasing the overhead accordingly by a factor 2ⁿ. Furthermore, the received signal energy is reduced to the same fraction 1/2ⁿ, degrading the quality of the channel estimation. This variant extends the range for coordinated sounding to distances equivalent to 1-1/2ⁿ symbol times, e.g. for n=1 and n=2 to a range of 15 km and 22.5 km, respectively, assuming a typical symbol time. Figure 4c shows an example in which the detection window of the sounding symbol is reduced to ½ of the regular detection window accepting the drawback that only ½ of the available subcarriers with signal energy reduced by ½ can be used for downlink measurement. The number of samples can be further reduced, e.g. to ¼. Thus, the number of simultaneously measured base stations is reduced, resulting in additional overhead.

## Claims

1. A method for radio channel estimation in a radio communication system (1), wherein said system (1) comprises at least two mobile stations (2, 3) and at least two base stations (4, 5), each having a certain number of sectors and at least one antenna element for each sector, wherein one of said base stations is a serving base station (4) for a first one of said mobile stations, and wherein the at least one further base station is a neighboring base station (5) of said serving base station (4) and is serving the at least one further mobile station (3), said method comprising the steps of:
generating (S1) a schedule for measurement signals in the serving base station (4);
transmitting (S2) said schedule from the serving base station (4) to the first mobile station (2);
transmitting (S3) in accordance with said schedule measurement signals from the serving base station (4) to the first mobile station (2);
calculating (S4) in the first mobile station (2) a mean channel state for the downlink channel from the serving base station (4) to the first mobile station (2); and
transmitting (S5) said mean channel state to the serving base station (4),
**characterized by**
transmitting (S2) said schedule from the serving base station (4) also to the at least one further mobile station (3) via the neighboring base station (5);
transmitting (S3) said measurement signals from the serving base station (4) also to the at least one further mobile station (3);
calculating (S4) in the at least one further mobile station (3) a mean channel state for the downlink channel from the serving base station (4) to the at least one further mobile station (3);
transmitting (S5) said mean channel state to the neighboring base station (5); and
transmitting (S6) the respective mean channel state from at least one of said base stations to at least one further base station of the radio communication system (1).

2. Method according to claim 1, further comprising the step of determining an area around the sector in which the first mobile station (2) is located, wherein base stations within said area are neighboring base stations (5) of the serving base station (4).

3. Method according to claim 2, wherein all neighboring base stations (5) schedule measurements and wherein one subcarrier or one orthogonal code to be transmitted within the same OFDM symbol is allocated to at most one base station within said determined area.

4. Method according to claim 3, wherein each base station distributes to all other base stations within said determined area the subcarrier or code allocations intended for channel measurement.

5. Method according to claim 3 or 4, wherein each base station distributes to all other base stations within said determined area the transmit parameters used for their measurement allocation.

6. Method according to any of the preceding claims, wherein the transmitting (S3) of said measurement signals to the mobile stations is repeated regularly.

7. Method according to any of the preceding claims, wherein the calculating (S4) of the mean channel states is performed by averaging over multiple measurements in frequency and time.

8. Method according to any of claims 1 to 7, wherein the measurement signals comprise specific symbols and a prefix, and wherein the delay of the measurement signals at mobile stations, which shall receive said measurement signals, is smaller than the length of said prefix.

9. Method according to any of claims 1 to 7, wherein the measurement signals comprise specific symbols and a prefix, and wherein the specific symbols are extended according to an expected delay of the measurement signals at mobile stations, which shall receive said measurement signals and / or wherein the measurement signals comprise specific symbols and a prefix, and wherein a sampling time for said measurement signals at mobile stations is decreased to a certain fraction of a regular sampling time.

10. Computer program product for radio channel estimation in a radio communication system, the computer program product comprising a computer readable medium, having thereon computer program code means, when said program is loaded, to make a computer executable for carrying out the method according to any of the claims 1 to 9.

11. Radio communication system (1), comprising at least two mobile stations (2, 3) and at least two base stations (4, 5), each having a certain number of sectors and at least one antenna element for each sector, wherein one of said base stations is a serving base station (4) for a first one of said mobile stations, wherein the at least one further base station is a neighboring base station (5) of said serving base station (4) and is adapted to serve the at least one further mobile station (3), and wherein:
the serving base station (4) is adapted to generate a schedule for measurement signals, to transmit said schedule to the first mobile station (2), and to transmit measurement signals in accordance with said schedule to the first mobile station (2); and
the first mobile station (2) is adapted to calculate a mean channel state for the downlink channel from the serving base station (4) to the first mobile station (2), and to transmit said mean channel state to the serving base station (4),
**characterized in that**
the serving base station (4) is further adapted to transmit said schedule also to the at least one further mobile station (3) via the neighboring base station (5), and to transmit the measurement signals also to the at least one further mobile station (3);
the at least one further mobile station (3) is adapted to calculate a mean channel state for the downlink channel from the serving base station (4) to the at least one further mobile station (3), and to transmit said mean channel state to the neighboring base station (5); and
at least one of said base stations is adapted to transmit the respective mean channel state to at least one further base station of the radio communication system (1).

12. Base station (4) of a radio communication system (1), wherein said system (1) comprises at least two mobile stations (2, 3) and at least two base stations (4, 5), each having a certain number of sectors and at least one antenna element for each sector, wherein said base station is a serving base station (4) for a first one of said mobile stations, wherein the at least one further base station is a neighboring base station (5) of said serving base station (4) and is adapted to serve the at least one further mobile station (3), and wherein the serving base station (4) is adapted:
to generate a schedule for measurement signals;
to transmit said schedule to the first mobile station (2);
to transmit in accordance with said schedule measurement signals to the first mobile station (2); and
to receive a mean channel state for the downlink channel from the serving base station (4) to the first mobile station (2) calculated in the first mobile station (2),
**characterized in that** the serving base station (4) is further adapted:
to transmit said schedule also to the at least one further mobile station (3) via the neighboring base station (5);
to transmit said mean channel state to at least one further base station of the radio communication system (1); and
to receive a mean channel state for the downlink channel from the serving base station (4) to the at least one further mobile station (3) from the neighboring base station (5).

13. Base station (5) of a radio communication system (1), wherein said system (1) comprises at least two mobile stations (2, 3) and at least two base stations (4, 5), each having a certain number of sectors and at least one antenna element for each sector, wherein said base station is a neighboring base station (5) of a serving base station (4) for a first one said mobile stations and is adapted to serve the at least one further mobile station (3),
**characterized in that** said neighboring base station (5) is adapted:
to receive a schedule for measurement signals from the serving base station (4);
to transmit said schedule to the further mobile station (3);
to receive a mean channel state for the downlink channel from the serving base station (4) to the further mobile station (3) from the further mobile station (3); and
to transmit said mean channel state to the serving base station (4).

14. Mobile station (2) of a radio communication system (1), wherein said system
(1) comprises at least two mobile stations (2, 3) and at least two base stations (4, 5), each having a certain number of sectors and at least one antenna element for each sector, wherein said mobile station (2) is a first one of said mobile stations, wherein one of said base stations is a serving base station (4) for said first mobile station (2), wherein the at least one further base station is a neighboring base station (5) of said serving base station (4) and is adapted to serve the further mobile station (3); and wherein the first mobile station (2) is adapted:
to receive a schedule for measurement signals from the serving base station (4);
to receive measurement signals in accordance with said schedule from the serving base station (4);
to calculate a mean channel state for the downlink channel from the serving base station (4) to itself (2); and
to transmit said mean channel state to the serving base station (4).

15. Mobile station (3) of a radio communication system (1), wherein said system (1) comprises at least two mobile station (2, 3) and at least two base stations (4, 5), each having a certain number of sectors and at least one antenna element for each sector, wherein one of said base stations is a serving base station (4) for a first one of said mobile stations, wherein the at least one further base station is a neighboring base station (5) of said serving base station (4) and is adapted to serve the further mobile station (3); and wherein the further mobile station (3) is adapted:
to receive a schedule for measurement signals from the serving base station (4) via the neighboring base station (5);
to receive measurement signals from the serving base station (4);
to calculate a mean channel state for the downlink channel from the serving base station (4) to itself (3); and
to transmit said mean channel state to the neighboring base station (5).
